Europäisches Patentamt

European Patent Office

Office européen des brevets

(19)

(11) Veröffentlichungsnummer: **0 136 255 B1**

(12) **EUROPÄISCHE PATENTSCHRIFT**

(45) Veröffentlichungstag der Patentschrift:
30.03.88

(21) Anmeldenummer: 84730095.1

(22) Anmeldetag: 10.09.84

(51) Int. Cl.⁴: **C 10 J 3/20,** C 10 J 3/02,
C 10 B 53/00

(54) Reaktorvorrichtung zur Erzeugung von Generatorgas aus brennbaren Abfallprodukten.

(30) Priorität: 28.09.83 DE 3335544

(43) Veröffentlichungstag der Anmeldung:
03.04.85 Patentblatt 85/14

(45) Bekanntmachung des Hinweises auf die Patenterteilung:
30.03.88 Patentblatt 88/13

(84) Benannte Vertragsstaaten:
AT CH DE FR GB IT LI SE

(56) Entgegenhaltungen:
EP - A - 0 085 821
EP - A - 0 126 408
WO - A - 81/00112
DE - C - 557 986
DE - C - 883 317
FR - A - 2 511 028

(73) Patentinhaber: Michel-Kim, Herwig, Bamberger
Strasse 41, D-1000 Berlin 30 (DE)

(72) Erfinder: Michel-Kim, Herwig, Bamberger Strasse 41,
D-1000 Berlin 30 (DE)

(74) Vertreter: Henkel, Feiler, Hänzel & Partner,
Kurfürstendamm 170, D-1000 Berlin 15 (DE)

## Beschreibung

Die Erfindung betrifft eine Reaktorvorrichtung zur Erzeugung von Generatorgas aus brennbaren Abfallprodukten nach der Gattung des Hauptanspruchs.

Biomasse, insbesondere Holz, wird seit mehreren Jahrhunderten in Meilern zur Gewinnung von Holzkohle verkohlt, wobei der traditionelle Meilerbetrieb durch Abdecken der Biomasse mittels Erdaufschüttung später durch die Verwendung von Retorten ersetzt wurde, deren Beheizung von aussen erfolgt. Die Erzeugung von Schwelgas und/oder Generatorgas bzw. die Umwandlung von aus organischen Massen gewonnenen Dämpfen wird in Doppelvergasern durchgeführt, bei denen einem Schwelvergaser meist ein Koksvergaser nachgeschaltet ist, so dass sich ein relativ reines Generatorgas erzeugen lässt.

Zum Stand der Technik sei des weiteren auf das sogenannte Reichelt-Spülgasverfahren (DE-PS 666 387, 712 552, 713 290 und 744 135) verwiesen sowie auf das SIFIC-Verfahren (DE-PS 763 915). Nach diesen bekannten Verfahren erfolgt die Verkohlung in Retorten, die diskontinuierlich bzw. kontinuierlich mit Biomasse beschickt werden, wobei hier als Gewinnungsprodukte die kondensierbaren Bestandteile der organischen Dämpfe interessieren und die für die Schwelgaserzeugung erforderliche Wärme durch Verbrennung wenigstens eines Teiles des Restgases vorgegeben wird.

Schliesslich soll noch auf das bekannte Kiener-Verfahren hingewiesen werden, bei dem gleichfalls einem Schwelvergaser ein Koksvergaser nachgeschaltet ist und eine besonders günstige Energieausnutzung dadurch erzielt wird, dass das Generatorgas für den Betrieb von Gasmotoren genutzt wird, während die Schwelvergasung mittels der Motorabgase in einer Schweltrommel erfolgt. Durch das in sich geschlossene System arbeitet das Verfahren äusserst umweltfreundlich, da mit Ausnahme des anfallenden Kondenswassers alle entstehenden giftigen Verbindungen, wie beispielsweise Schwermetallverbindungen im Schwelkoks verbleiben. Nachteilig bei diesem Verfahren ist jedoch wiederum die Aussenbeheizung der Schweltrommel und die damit verbundene unempfindliche und zeitaufwendige Abhängigkeit zwischen Beschickung des Reaktors einerseits und Gasbedarf andererseits.

Hier setzt die vorliegende Erfindung ein, der die Aufgabe zugrunde liegt, die Vorzüge des bekannten Spülgasverfahrens mit Konversion der Schwelgase in Koksgeneratoren zu nutzen bei gleichzeitig schneller Anpassung der Dosierung der Beschickung der Reaktorvorrichtung einerseits und der Gewinnung von Schwach- bzw. Generatorgas, also der Anpassung an den jeweiligen Energiebedarf andererseits bei optimal umweltfreundlicher Arbeitsweise auch für den Fall, dass Biomassen oder andere brennbare Abfallprodukte verarbeitet werden, die ansonsten der Umwelt nicht zuführbare Schadstoffe enthalten.

Die Lösung dieser Aufgabe wird erfindungsgemäss für eine Vorrichtung der im Gattungsteil des Anspruchs 1 genannten Art durch die im Kennzeichen dieses Anspruchs angegebenen Merkmale gelöst.

Vorteilhafte Ausgestaltungen und Weiterbildungen dieser Aufgabenlösung ergeben sich aus den Unteransprüchen.

Die Einfügung des Flugstrom-Gaswandlers zwischen Primärvergaser und Sekundärvergaser mit seitlicher Luftzufuhr vorzugsweise durch eine Mehrzahl von Rohren bzw. Düsen erhöht in Verbindung mit der in diesem Bereich ohnehin vorhandenen Zentrifugalbewegung die Verweilzeit des vom Primärreaktor abgegebenen Fluidstroms erheblich, so dass hier Temperaturen von nahezu 1000°C erreicht werden können. Die für die Erwärmung benötigte Sekundärluft wird dosierbar zugeführt, wobei zusätzlich vorteilhaft ist, dass die Zufuhr dadurch homogenisiert und egalisiert wird, dass die Luftzufuhr über einen Ringspalt im Bereich der Ummantelung des Sekundärvergasers tangential an der Ummantelung entlangströmt. Die Mehrzahl der die Sekundärluft in den Bereich zwischen Primärvergaser und Sekundärvergaser eingebenden Düsen sorgt für eine thermisch nur geringe Belastung des füllstandsabhängig gelagerten Füllstandssiebes. Die Drehschiebeaustragung der Schlackereste und dergleichen aus dem Primärvergaser unter Verwendung einer exzentrisch angeordneten Austragschnecke verhindert jedes Anbacken im Bodenbereich des Reaktors, so dass auch hierdurch die Betriebssicherheit und Einsatzfähigkeit der Reaktorvorrichtung verbessert und erweitert wird.

Es ist darüber hinaus nicht nur vorteilhaft, dass das den Raum des Flugstrom-Gaswandlers zum Primärvergaser hin begrenzende Füllstandssieb in Abhängigkeit von dem gewünschten Betriebszustand und der Leistung des Reaktors in seiner Höhe einstellen lässt, sondern auch dass eine Höhenverstellbarkeit gleichermassen für den Ringrost gegeben ist, der den Raum des Flugstrom-Gaswandlers nach oben hin gegen den Sekundärvergaser abgrenzt. Eine zentralsymmetrische Ansaugung des Gases sichert eine gleichmässige Durchströmung des Reaktors und die Vorerwärmung der Primärluft im Gegenstrom unter Zuhilfenahme eines lamellenartig ausgebildeten Wärmetauschers eine merkliche thermische Entlastung der Wände des Reaktors.

Für den Betrieb des Reaktors ist es besonders vorteilhaft, dass das Schwel- bzw. Verdampfungsgut mit teilverbranntem Generatorgas so beheizt wird, dass sich ohne kritische Verzögerungen Soll-Istwertbedingungen störungsfrei einstellen lassen, wobei der Wärmetausch in einer reduzierenden Atmosphäre mit hohem Wasserstoffanteil erfolgt. Vorteile ergeben sich hierbei insbesondere bei der Vergasung von schwer brennbaren Abfallprodukten, wie Altöl oder dergleichen, die umweltbelastende Schwermetallverbindungen enthalten und die bei dem erfindungsgemäss ausgelegten Reaktor nicht oxidiert werden, sondern durch die gegebenen reduzierenden Bedingungen bei hoher Temperatur über die Schlacke bzw. Asche des Primärvergasers gefahrlos zu beseitigen sind. Damit verbindet der vorliegende Reaktor gewissermassen die Vorzüge des bekannten Spülgasverfahrens mit der Umwandlung von Schwelgas in Koksvergasern bei gleichzeitiger Pufferung der Gaserzeugung. Die reduzierenden Bedingungen für den Verschwelungsvorgang in einer Wasserstoff angereicherten Atmosphäre verhindern oder vermindern zumindest die Teerablagerung und die Graphitbildung in den Leitungen des Reaktors.

Bei der Inbetriebnahme der Reaktorvorrichtung ist es ohne Schwierigkeiten möglich, die Energie für die Verschwelung aus dem Primärvergaser selbst zu gewinnen und während des Betriebes verzögerungsfrei Schwankungen in der Schwelgaserzeugung auszugleichen. Abhängig vom Gasverbrauch ändert sich der Unterdruck innerhalb des Flugstrom-Gaswandlers, davon abhängig wiederum der Bypassstrom des Generatorgases für den Betrieb des Sekundärreaktors und schliesslich in Abhängigkeit der Temperatursteuerung die Verbrennungsluftmenge sowie die Schwel- bzw. Verdampfungsgutzufuhr, was letztlich gleichbedeutend damit ist, dass die für den Reaktorbetrieb vorhandenen bzw. vorzugebenden Parameter in einer optimalen Abhängigkeit voneinander steuerbar sind.

Der erfindungsgemässe Doppelvergaser lässt sich gleichermassen vorteilhaft für die Holz- und Torfverkohlung zur Erzeugung stückiger Holzkohle bzw. Torfkohle, für die Aktivkohleerzeugung, die Verdampfung und Konversion von Altölen, Schlämmen aller Art, wie auch Emulsionen als auch für die Pyrolyse von Abfällen verschiedenster Art bis hin zu Schlachtereiabfällen, Krankenhausabfällen oder Klärschlämmen einsetzen.

Die in verschiedenen vorteilhaften Ausführungsformen möglichen Bypassführungen sind insofern besonders erwähnenswert, als die Verschwelung bzw. Verdampfung durch den betriebsbedingten Unterdruck bzw. Saugzug im Primärvergaser mit kurzer Verzögerungszeit steuerbar ist, wobei die Veränderung des Unterdruckes mittels eines Druckminderers für eine Anpassung des Bypassgasanteiles Sorge trägt. Schwankungen bei dem Verdampfungs- bzw. Schwelvorgang lassen sich mühelos durch den Primärvergaserbetrieb ausgleichen.

Die beiliegenden Zeichnungen sollen die vorliegende Erfindung anhand vorteilhafter beispielsweise Ausführungsformen näher erläutern.

Es bedeutet:

Fig. 1 einen Längsschnitt durch eine erfindungsgemässe Reaktorvorrichtung;
Fig. 2 eine Ausführungsform einer Bypassanordnung in Verbindung mit dem Doppelvergaser nach Fig. 1;
Fig. 3 eine weitere Bypassausführungsform unter Verwendung eines Containers; und
Fig. 4. eine noch weitere Ausführungsform für eine Bypassanordnung mit einer Schweltrommel.

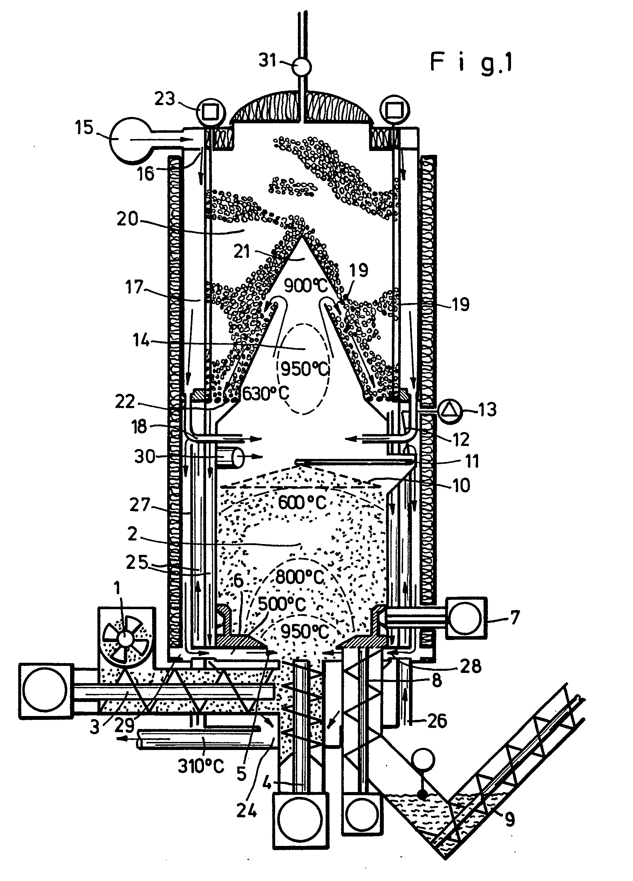

Fig. 1 zeigt schematisch im Längsschnitt die Reaktorvorrichtung, bestehend aus einem aufrecht stehenden zylindrischen Reaktorgefäss, in dessen unterem Teil der Primärvergaser 2 untergebracht ist, während der obere Bereich den Sekundärvergaser 20 definiert. Der Innenraum zwischen Primär- und Sekundärvergaser gibt als Zwischenvergaser einen Flugstrom-Gaswandler 14 zwischen einem Füllstandssieb 10 des Primärvergasers 2 und einem Ringrost 22 des Sekundärvergasers 20 vor.

Dem Primärvergaser 2 wird zentrisch vom Boden der Reaktorvorrichtung her der Primärbrennstoff in Form von Biomasse oder anderen verschwelbaren Abfallprodukten zugeführt. Hierfür läuft der Primärbrennstoff von einem nicht dargestellten Speicher über eine Dosierschnecke 1 in eine horizontale Stossschnecke 3, die senkrecht in eine vertikale Stossschnecke 4 einmündet, durch die proportional zum Abbrand im Primärvergaser 2 der Brennstoff verstopfungsfrei eingebracht wird.

Die Primärluft zum Betreiben des Primärreaktors 2 wird über einen unterhalb des Reaktorbodens angeordneten Ringkanal 26 angesaugt und von dort über einen Gegenstrom-Wärmeaustauscher 25 geleitet. Die Primärluft nimmt somit folgenden Weg: Vom Ringkanal 26 strömt sie in den Gegenstrom-Wärmeaustauscher 25, der als mittlerer Ringraum zwischen einem inneren Ringraum und einem äusseren Ringraum in der Ummantelung der Reaktorvorrichtung im wesentlichen im Bereich des Primärvergasers 2 angeordnet ist. Der innere Ringkanal oder Ringraum ist von dem mittleren Ringraum durch eine Lamellenwand getrennt, über die ein hoher Wärmeanteil des den Sekundärvergaser durch den inneren Ringraum verlassenden Gases auf die angesaugte Primärluft übertragen wird. Die im Gegenstrom auf diese Weise erwärmte Primärluft wird, wie aus Fig. 1 ersichtlich, etwa in der Höhe der Düsen 18 für die Zuführung der Sekundärluft in die Reaktorvorrichtung im Reaktormantel um das obere Ende eines Trenn- bzw. Leitbleches 27 umgelenkt und bezogen auf den Gasstrom des Sekundärvergasers 20 im Gleichstrom innerhalb eines äusseren Ringraumes nach unten zum Reaktorboden hin geleitet und hier durch eine Mehrzahl symmetrisch zueinander angeordneter Düsen 28 der Ringdüse 5 zugeführt. Im Ausführungsbeispiel strömt die Primärluft infolge der speziellen Führung innerhalb des Reaktormantels, etwa auf 500°C erwärmt, in den Einspeisungsbereich der Biomasse oder dergleichen in den Primärvergaser 2 ein, dessen Reaktortemperatur dort ca. bei 950°C liegt.

Unmittelbar oberhalb der zentrischen Einspeisung des Primärbrennstoffes über die vertikale Stossschnecke 4 und der Zuführung der vorerwärmten Primärluft über die Ringdüse 5 befindet sich im Bodenbereich der Reaktorvorrichtung ein Drehschieber 6 für den Schlackeabzug. Der Drehschieber 6 ist beispielsweise in Form eines Ringrostes an der Seitenwand der Reaktorvorrichtung beweglich gelagert und mit einem Antrieb 7 versehen, wobei er eine exzentrisch durch den Reaktorboden geführte Austragungsschnecke 8 übergreift, die im Ausführungsbeispiel vertikal zum Reaktor liegt und durch die die Schlacke und dergleichen nicht brennbare Bestandteile einer Wasserschleuse 9 zugeführt wird. Der Abzug der nicht brennbaren Bestandteile aus dem Primärreaktor kann hierbei kontinuierlich oder diskontinuierlich erfolgen.

Aus der Wasserschleuse wird mittels einer weiteren in Aufwärtsrichtung fördernden Schnecke die gelöschte Schlacke ausgetragen. Die Höhe des Wasserspiegels in der Wasserschleuse 9 kann kontrolliert und falls gewünscht regelbar auf einem gewünschten Sollpegel gehalten werden.

Die Beschickung des Primärvergasers 2 mit Primärbrennstoff über die vertikale Stossschnecke 4 wird hinsichtlich der Füllhöhe des Primärvergasers überwacht und begrenzt durch ein Füllstandssieb 10, welches an der inneren Seitenwandung der Reaktorvorrichtung höhenverstellbar wie bei dem Bezugszeichen 11 in Fig. 1 schematisch dargestellt gelagert ist. Ein Fühler 12 tastet die jeweilige Ist-Höhe des Füllstandssiebes 10 ab und meldet diese eine Anzeige- und Steuervorrichtung 13, die gemäss dem Ist-Sollwertvergleich die Dosierschnecke 1 für den Primärbrennstoff betätigt. Das Füllstandssieb 10 begrenzt den Primärvergaser 2 nach oben hin und leitet über in den Flugstrom-Gaswandler 14 als Zwischenvergaser für das im Gleichstrom einströmende Primärgas, das hier soweit erhitzt wird, dass in ihm vorhandene Teer- und Phenolfraktionen innerhalb einer stark reduzierenden Atmosphäre beseitigt werden. Für die erhöhte Temperaturerzeugung innerhalb des Flugstrom-Gaswandlers 14 wird in diese über eine Mehrzahl von seitlich aus der Reaktorwand einmündenden Düsen 18 Sekundärluft zugeführt, die aus einem Ringraum 17 im Gleichstrom einfliesst, der um die Ummantelung der Reaktorvorrichtung im Bereich des Sekundärvergasers 20 angeordnet ist und im oberen Abdeckbereich des Reaktors über eine Dosiervorrichtung 15 gespeist wird.

Hierfür verbindet ein Ringspalt 16 die Ansaugung über die Dosiervorrichtung 15 mit dem Ringraum 17. Für die Egalisierung der Luftzufuhr wird die Sekundärluft unmittelbar hinter der Dosiervorrichtung 15 im Ringspalt 16 tangential an den Reaktormantel geführt und durch diesen Ringspalt über die Umfangsfläche homogen verteilt. Der Ringraum 17 dient der Vorerwärmung der angesaugten Sekundärluft, wobei ihre Einspeisung in den Flugstrom-Gaswandler 14 über die Düsen 18 so erfolgt, dass das Füllstandssieb 10 keine zu starke Erwärmung erfährt und die Verweilzeit des vom Primärvergasers 2 abgegebenen Gases vor Eintritt in den Sekundärvergaser 20 möglichst hoch in jedem Fall optimal für die Erzeugung eines teer- und phenolarmen Gases ist. Hierfür ist der den Flugstrom-Gaswandler 14 nach oben hin gegen den Sekundärvergaser 20 abschliessende Ringrost 22 so ausgebildet, dass er sich zentrisch in Aufwärtsrichtung verjüngt, also etwa Kegelform aufweist, wobei die Spitze 21 der Ringdüse 19 einen Stauraum für die in Aufwärtsrichtung mitgerissenen Gase und Partikel aller Art bildet und der Strömungsweg über die radialsymmetrische Ringdüse 19 innerhalb des Sekundärvergasers 20 bzw. zu diesem hin umgelenkt wird, um hier homogen das Koksbett des als Koksgenerator ausgebildeten Sekundärvergasers zu durchströmen. Die Umlenkung des Gasstromes über die Ringdüse 19 verlängert die Verweildauer der schwereren Teilchen, wie die in Aufwärtsrichtung beschleunigten Kohlepartikel in der Spitze 21 des Ringrostes 22, was die genannte erhöhte Verweildauer etwa proportional vergrössert. Die in diesem Bereich auf ca. 950°C zum Glühen gebrachte Flugkohle begünstigt den gewollten Reduktionsprozess.

Innerhalb des Sekundärvergasers 20 erfolgt darüber hinaus eine weitgehende Crackung der Teerbestandteile und der anderen schweren Fraktionen. Das nach Umlenkung über die radialsymmetrische Ringdüse 19 im Gleichstrom zurückgeführte Gas des Primärvergasers 2 erfährt im Koksbett des Sekundärvergasers 20 eine weitere Reduktion und tritt über den unteren Bereich des Ringrostes 22 mit ca. 600 bis 700°C in den inneren Ringraum des unteren Abschnittes der Reaktorvorrichtung ein. Die Länge der erforderlichen Reduktionszone lässt sich durch Höhenverstellung des Ringrostes 22 optimieren und den jeweiligen Verfahrensbedingungen anpassen.

Die Beschickung des Sekundärvergasers 20 mit Koks erfolgt über die Abdeckung der Reaktorvorrichtung in an sich bekannter Weise kontinuierlich oder diskontinuierlich. Eine Homogenisierung der Koksverteilung wird sichergestellt durch Vibrationsvorrichtungen 23 und eine Verbesserung der Reaktivität des Koksvergasers kann beispielsweise durch Ultraschallbeaufschlagung erfolgen. Über eine zentrale Absaugvorrichtung 24 im Boden der Reaktorvorrichtung wird das durch den inneren Ringraum im Gleichstrom geführte Gas dem Reaktor entnommen. Die hohe Temperatur des durch den genannten inneren Ringraum strömenden Gases schirmt den Primärvergaser 2 sehr weitgehend gegen Wärmeverluste nach aussen ab, wobei es an den vorgenannten Wärmetauscher zwischen dem inneren Ringraum und dem mittleren Ringraum, der der Vorerwärmung der Primärluft dient, im Ausführungsbeispiel ca. 40% der Wärme über die Lamellenzwischenwand abgibt.

Wesentlich für den Betrieb des Flugstrom-Gaswandlers 14 ist, dass diesem durch eine oder mehrere seitliche Fremdgaszuführungen 30 Fremdgas aller Art zugeführt werden kann. Um das Gas von Schadstoffen zu reinigen, wird die Adsorptionswirkung der im Flugstrom mitgerissenen hochaktiven Feinkohle genutzt, in dem das Gas diese Feinkohle in einem Beruhigungsbehälter durchströmt. Wenn ein Wäscher zur Gasreinigung dient, kann die erzeugte Flugkohle im Waschwasserkreislauf zur Reinigung genutzt werden.

Nachzutragen ist noch, dass die Ringdüsen 5 durch Beobachtungsfenster 29 optisch überwacht und gegebenenfalls gesäubert werden können. Um nach Beendigung des Reaktorbetriebes die Betriebstemperatur desselben möglichst lange erhalten zu können und eine Entgasung durch die Luftzuführung zu verhindern, ist im Deckelteil der Reaktorvorrichtung ein Kaminrohr vorgesehen. Die natürliche Thermik innerhalb der Reaktorvorrichtung sorgt dafür, dass sowohl die Primärluft als auch die Sekundärluft über die genannten Zuführungen in ausreichender Menge angesaugt werden und das entweichende Gas aus dem Primärreaktor durch den heissen Sekundärreaktor geführt qualmfrei und damit für die Umwelt unmerklich entweichen kann.

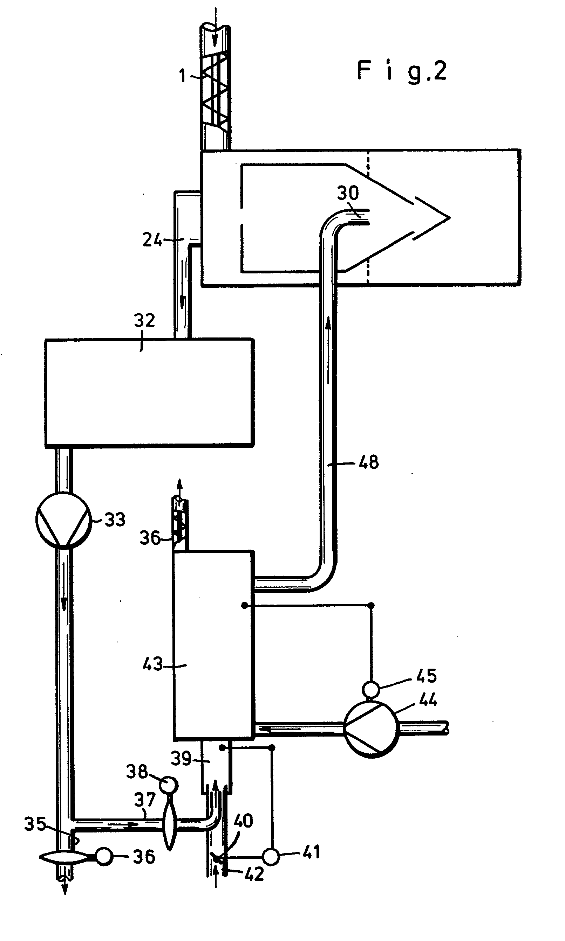

Die Fig. 2 bis 4 zeigen verschiedene Ausführungsformen von Bypassanordnungen für den Doppelvergaser nach Fig. 1.

Gemäss Fig. 2 wird das dem Doppelvergaser entnommene Generatorgas über den Gasabzug 24 einer Reinigungsvorrichtung 32 zugeführt und aus dieser gereinigt über ein Gebläse 33 und eine Rohrleitung 35 sowohl dem Bypass der Rohrleitung 37 als auch einem beliebigen Gasverbraucher über den Druckregler 36 zugeführt. Der über die Rohrleitung 37 abgezweigte Bypassstrom gelangt über einen Druckminderer 38, der bei Unterdruck anspricht in eine Brennkammer 39. In die Brennkammer 39 wird mittels einer temperaturabhängig geregelten Drosselklappe 40 unter Verwendung eines Stellmotors 41 dosiert über den Luftansaugstutzen 42 so viel Luft dem Bypass 35 zugegeben, dass eine jeweils stoffspezifische Brenntemperatur vorgebbar ist, wobei gleichzeitig darauf geachtet wird, dass die sauerstoffarme reduzierende Atmosphäre für das einströmende Gas erhalten bleibt. Das somit auf erhöhte Temperatur gebrachte Schwachgas gelangt von der Brennkammer 39 in eine Reaktionskammer 43 in der die brennbaren Komponenten mittels einer Dosiervorrichtung 44 und einem auf Temperaturabhängigkeit reagierenden Stellglied 45 so beaufschlagt werden, dass die jeweils eingesetzten Komponenten verdampft und/oder verschwelt werden und die in dieser Atmosphäre erzeugten Gase von der Reaktionskammer 43 über die Rohrleitung 48 der Fremdgaszufuhr 30 des Doppelvergasers zuführbar sind. Damit lässt sich im Flugstrom-Gaswandler 14 des Doppelvergaser nach Fig. 1 jede Schadstoffreaktion derart optimal in einem geschlossenen Kreislauf führen, das eine Belastung der Umwelt praktisch nicht mehr gegeben ist, was insbesondere für die Verbrennung von schwermetallhaltigen Schmierölen oder dergleichen von erheblicher Bedeutung ist. Etwaige Reststoffe, die in der Reaktionskammer 43 verbleiben, werden aus dieser über die Austragung 46 entnommen.

Nachfolgend werden noch zwei Ausführungsbeispiele für die Bypassanordnung, wie vorstehend beschrieben, angegeben.

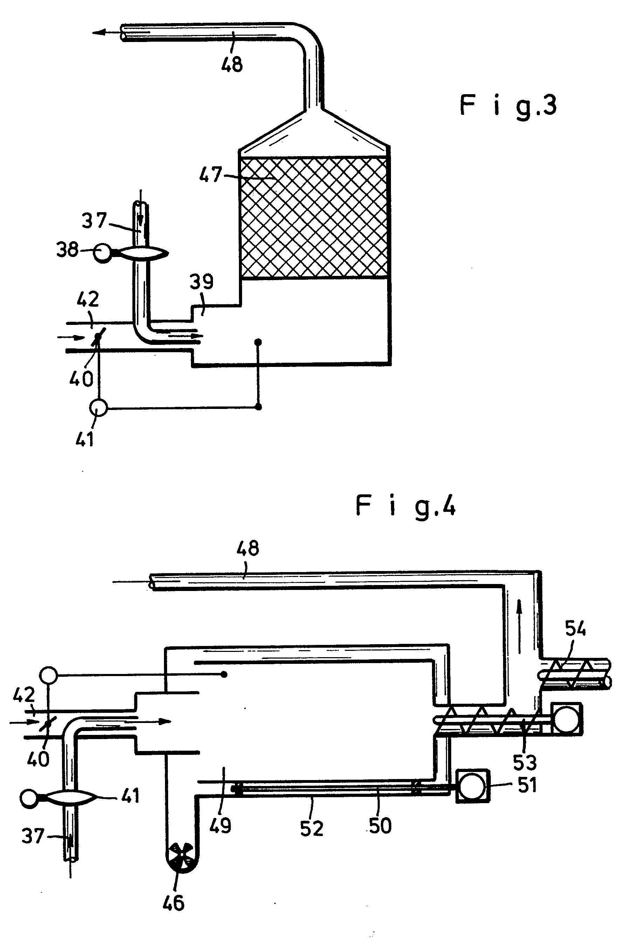

In Fig. 3 wird das dem Doppelvergaser entnommene gereinigte Gas über die Bypassleitung 37 und den Druckminderer 38 einem Brenner 39 zugeführt, dem eine geregelte Luftzufuhr zugeordnet ist, nämlich die Drosselklappe 40 mit dem Stellmotor 41 und dem Luftansaugstutzen 42 entsprechend der Bypassanordnung gemäss Fig. 2. Das erhitzte Gas durchströmt den Siebcontainer 47 von unten und die erzeugten Schwelgase werden mit dem teilverbrannten Schwachgas durch eine Rohrleitung 48 abgesaugt und über die Fremdgaszufuhr 30 in den Flugstrom-Gaswandler 14 über die Fremdgaszufuhr 30 eingebracht. Auch hier handelt es sich wiederum um einen in sich geschlossenen Kreislauf mit Ist-Sollwert für die jeweils gewünschten Parameter.

Bei der Ausführung gemäss Fig. 4 wird schliesslich wiederum ein geschlossener Bypass realisiert, und zwar unter Verwendung einer Schweltrommel 49, die entlang ihrer Ummantelung 52 über Rollenlager 50 drehbar gelagert ist, wobei die Rotation mittels des Antriebes 51 erfolgt. Das in der Schweltrommel 49 vorliegende zu verschwelende Gut wird über eine Schnecke 53 und eine Dosierschnecke 54 im Gegenstrom zugeführt. Die Schwelgase mit dem teilverbrannten Schwachgas werden durch die Schnecke 53 und die Absaugleitung 48 über die Fremdgaszufuhr 30 wiederum dem Flugstrom-Gaswandler 14 eingegeben, und die Schwelrückstände werden aus der Schweltrommel 49 über eine Austragvorrichtung 46 entnommen.

**Patentansprüche**

1. Reaktorvorrichtung zur Erzeugung von Schwachgas bzw. Generatorgas aus Biomasse oder anderen verschwelbaren Abfallprodukten aller Art, wie beispielsweise Schmierölen oder dergleichen, unter Verwendung eines Doppelvergasers, bestehend aus einem Primärvergaser mit höhenverstellbarem Füllstandssieb und einer Austragvorrichtung für die Verbrennungsrückstände, wobei der Primärbrennstoff und die vorerwärmte Primärluft dem Primärvergaser über den Reaktorboden zuführbar sind und aus einem nachgeschalteten Sekundärvergaser nach Art eines mit dem Primärvergaser im Gleichstrom liegenden Koksgenerators mit getrennter Sekundärluftzuführung, dadurch gekennzeichnet, dass zwischen dem Primärvergaser (2) und dem Sekundärvergaser (20) ein Flugstrom-Gaswandler (14) vorgesehen ist, in den ein Gemisch der Sekundärluft für den Sekundärvergaser (20) und des Schwelgases des Primärvergasers (2), sowie die zufolge der gegebenen Zentrifugalbewegung aus letzterem austretenden Kohleteilchen gelangt, wobei das Gemisch und die Kohleteilchen bei hoher Verweildauer unter reduzierenden Bedingungen mittels einer radialsymmetrischen Ringdüse (19) zum Sekundärvergaser (20) geführt werden, und dass der Flugstrom-Gaswandler (14) neben den Düsen (18) für die Sekundärluftzuführung wenigstens eine Fremdgaszuführung (30) aufweist, wobei die Fremdgaszuführung (30) gegebenenfalls mit einer Bypassanordnung, der zumindest ein Teilstrom des Generatorgases zuführbar ist, verbindbar ist.

2. Reaktorvorrichtung nach Anspruch 1, dadurch gekennzeichnet, dass dem Primärvergaser (2) das brennbare Material proportional zum Abbrand steuerbar über eine zentrisch in den Reaktorboden einmündende vertikale Stossschnecke (4) zugeführt wird, die an eine horizontale Stossschnecke (3) angeschlossen ist.

3. Vorrichtung nach Anspruch 1, dadurch gekennzeichnet, dass im Bodenbereich des Primärvergasers (2) ein Drehschieber (6) über einen Antrieb (7) beweglich gelagert ist, über den die nicht brennbaren Schlackebestandteile und dergleichen einer exzentrisch in den Reaktorboden einmündenden Austragungsschnecke (8) zuführbar sind.

4. Vorrichtung nach Anspruch 1, dadurch gekennzeichnet, dass die Lagerung des höhenverstellbaren Füllstandssiebes (10) des Primärvergasers (2) durch seitliche Lager (11) vorgegeben ist, die mit Fühlern (12) in Wirkverbindung stehend die jeweilige Ist-Füllhöhe des Primärvergasers (2) einem Steuer- und Anzeigegerät (13) zuführen.

5. Vorrichtung nach Anspruch 1, dadurch gekennzeichnet, dass der Flugstrom-Gaswandler (14) gegen den Sekundärvergaser (20) sich konisch verjüngend in diesen hineinragend mittels einer radialsymmetrischen Ringdüse (19) getrennt ist, durch die das im Gleichstrom erzeugte und durch das Füllstandssieb (10) aus dem Primärvergaser (2) in den Flugstrom-Gaswandler (14) eintretende Primärgas dem Sekundärvergaser (20) turbulent verwirbelt zuführbar ist derart, dass die Verweildauer der Kohlepartikel gegenüber dem Gasstrom verlängert ist.

6. Vorrichtung nach Anspruch 1 und 4, dadurch gekennzeichnet, dass eine Mehrzahl von Düsen (18) Sekundärluft von der Seite her in den Flugstrom-Gaswandler (14) einbringt und dass eine Dosiervorrichtung (15) die Sekundärluft bei tangentialer Zuführung an den Reaktormantel im Bereich des Sekundärvergasers über einen Ringspalt (16) im Gleichstrom erwärmbar den Düsen (18) zuführt.

7. Vorrichtung nach Anspruch 1, dadurch gekennzeichnet, dass die radialsymmetrische Ringdüse (19) oberhalb eines höhenverstellbar gelagerten Ringrostes (22) angeordnet ist und dass der Ringrost (22) mit Vibrationsvorrichtungen (23) in Verbindung steht.

8. Vorrichtung nach Anspruch 1, dadurch gekennzeichnet, dass in der oberen Abdeckung der Reaktorvorrichtung und damit oberhalb des Sekundärvergasers (20) eine Dosieröffnung (31) für den Ruhebetrieb des Reaktors vorgesehen ist.

9. Vorrichtung nach Anspruch 1, dadurch gekennzeichnet, dass die Fremdgaszuführung (30) in eine Rohrleitung (48) mündet, die wahlweise mit einer Spülgaspyrolysevorrichtung, nämlich einer Reaktionskammer (43), einer Containerpyrolysevorrichtung (47) oder einer Spülgaspyrolysetrommel (49) verbunden ist, der bzw. dem vom Gasabzug (24) ein Teil des Reaktorgases über Druckminderer (38 bzw. 41) und eine Bypassleitung (37) zuführbar ist derart, dass das Gemisch aus heissem, teilverbranntem Generatorgas und Schwelgas der mit festen und/oder flüssigen Pyrolysegut beschickten Spülgaspyrolysevorrichtung (43, 47, 49) in den Flugstrom-Gaswandler (14) einführbar ist.

## Claims

1. Reactor apparatus for producing lean gas or generator gas from biomass or other low-temperature carbonisable waste products of all kinds, for example lubricating oils or the like, using a dual gasifier, comprising a primary gasifier with vertically adjustable level sieve and a discharging unit for the residues of combustion, the primary fuel and the pre-heated primary air being fed to the primary gasifier via the reactor bottom, and also comprising a downstream secondary gasifier in the style of a co-currently disposed coke generator with separate secondary air supply, characterised in that between the primary gasifier (2) and the secondary gasifier (20) there is provided a flue-current gas converter (14) into which passes a mixture of the secondary air for the secondary gasifier (20) and the low temperature carbonisable gas from the primary gasifier (2), along with the carbon particles exiting from the latter as a result of the centrifugal motion produced, the mixture and the carbon particles being channelled, with a high sojourn time under reducing conditions, by means of a radially symmetrical ring tuyere (19) to the secondary gasifier (20), and that in addition to the tuyeres (18) for supplying secondary air the flue-current gas converter (14) exhibits at least one foreign gas admission (30), said foreign gas admission (30) adapted to be connected, if required, to a bypass assembly to which at least a component current of the generator gas can be fed.

2. Reactor apparatus according to Claim 1, characterised in that the combustible material is fed to the primary gasifier (2) in amounts regulable in proportion to the burn-up via a vertical pusher screw (4) opening centrically into the reactor bottom and connected to a horizontal pusher screw (3).

3. Apparatus according to Claim 1, characterised in that in the bottom zone of the primary gasifier (2) a rotary slide valve (6) is movably mounted via a drive (7), via which the non-combustible slag components and the like can be fed to a discharging screw (8) opening eccentrically into the reactor bottom.

4. Apparatus according to Claim 1, characterised in that the method of bearing of the vertically adjustable level sieve (10) of the primary gasifier (2) is prescribed by lateral bearings (11) which in co-operation with sensors (12) supply the respective actual filling level of the primary gasifier (2) to a control and indicating device (13).

5. Apparatus according to Claim 1, characterised in that the flue-current gas converter (4) is separated by means of a radially symmetrical ring tuyere (19) from the secondary gasifier (20) and projects in a conical taper into the latter, the primary gas generated in parallel flow and passing through the level sieve (10) from the primary gasifier (2) into the flue-current gas converter (14) able to be violently swirled through said ring tuyere (19) to the secondary gasifier (20) so that the sojourn time of the carbon particles is extended compared with the gas current.

6. Apparatus according to Claim 1 and 4, characterised in that a plurality of tuyeres (18) introduce secondary air from the side into the flue-current gas converter (14) and that a metering device (15) feeds the secondary air via an annular gap (16) to the tuyeres (18), the air being fed tangentially to the reactor casing in the region of the secondary gasifier and heatable in parallel flow.

7. Apparatus according to Claim 1, characterised in that the radially symmetrical ring tuyere (19) is arranged above a vertically adjustably mounted ring grate (22) and that the ring grate (22) is connected to vibrational devices (23).

8. Apparatus according to Claim 1, characterised in that in the top cover of the reactor apparatus and hence above the secondary gasifier (20) there is provided a metering port (31) for when the reactor is at rest.

9. Apparatus according to Claim 1, characterised in that the foreign gas admission (30) opens into a conduit (48) which is connected as required to a circulation gas pyrolysis unit, namely a reaction chamber (43), a container pyrolysis unit (47) or a circulation gas pyrolysis drum (49), to which part of the reactor gas can be fed from the gas vent (24) via pressure reducers (38 and 41) and a bypass line (37), so that the mixture of hot, partially combusted generator gas and lean gas can be introduced from the circulation gas pyrolysis unit (43, 47, 49) charged with solid and/or liquid pyrolysis material into the flue-current gas converter (14).

## Revendications

1. Gazogène pour la production de gaz pauvre ou de gaz de gazogène à partir de biomasse ou d'autres déchets distillables, comme par exemple des huiles de graissage ou analogues, par l'utilisation d'un gazogène double comportant d'une part un gazogène primaire ayant une grille de niveau maximal réglable en hauteur et un dispositif de dégagement pour les déchets de combustion, le combustible primaire et l'air primaire préchauffé étant introduits par le fond dans le gazogène primaire, et d'autre part un gazogène secondaire monté en série derrière le précédent à la manière d'un gazogène à coke disposé dans le même sens de flux que le gazogène primaire et pourvu d'une arrivée secondaire séparée, caractérisé en ce qu'entre le gazogène primaire (2) et le gazogène secondaire (20) est prévu un transformateur de gaz tourbillonnant (14) dans lequel pénètrent un mélange d'air secondaire destiné au gazogène secondaire (20) et de gaz de distillation du gazogène primaire (2) ainsi que des particules de charbon sortant de ce dernier, sous l'effet du mouvement centrifuge imprimé, ledit mélange et lesdites particules de charbon étant amenés au gazogène secondaire (20) en subissant des temps de séjour prolongés sous des conditions réductrices au moyen d'une buse annulaire à symétrie radiale (19) et en ce que ledit transformateur de gaz tourbillonnant (14) présente à côté des buses (18) d'arrivée de l'air secondaire au moins une conduite d'amenée de gaz externes (30), ladite conduite d'amenée de gaz externes (30) pouvant être éventuellement reliée à un dispositif à by-pass recevant au moins une partie du flux du gaz du gazogène.

2. Gazogène suivant la revendication 1, caractérisé en ce que le matériau combustible est amenè au gazogène primaire de manière réglable proportionnellement à sa combustion au moyen d'une vis sans fin (4) verticale débouchant dans le centre du fond du gazogène et travaillant en liaison avec une vis sans fin horizontale.

3. Gazogène suivant la revendication 1, caractérisé en ce qu'un poussoir tournant (6) pouvant être mis en mouvement par un organe moteur (7) est disposé au voisinage du fond du gazogène primaire (2), poussoir au moyen duquel les scories non combustibles et les autres parties analogues peuvent être amenées vers une vis sans fin d'extraction (8) débouchant de manière excentrée dans le fond du gazogène.

4. Gazogène suivant la revendication 1, caractérisé en ce que la position de la grille de niveau (10) du gazogène primaire (2) réglable en hauteur est prédéterminée par des supports latéraux (11) qui travaillent en liaison avec des jauges (12) de position transmettant la hauteur de remplissage effective du gazogène primaire (2) à un appareil de commande et de contrôle (13).

5. Gazogène suivant la revendication 1, caractérisé en ce que le transformateur de gaz tourbillonnant (14) est séparé au moyen d'une buse annulaire (19) à symétrie radiale du gazogène secondaire (20) dans lequel il pénètre en se rétrécissant à la façon d'un cône, buse à travers laquelle le gaz primaire engendré par le gazogène primaire (2) selon un courant de même sens pénètre dans le transformateur de gaz tourbillonnant (14) à travers la grille de niveau (10) pour être amené au gazogène secondaire (20) en un tourbillon turbulent de telle manière que le temps de séjour des particules de charbon dans le courant de gaz se trouve prolongé.

6. Gazogène suivant l'une des revendications 1 et 4, caractérisé en ce que plusieurs buses (18) font entrer de l'air secondaire latéralement dans le transformateur de gaz tourbillonnant (14) et en ce qu'un dispositif de règlage (15) amène l'air secondaire aux buses (18) en lui faisant parcourir un chemin tangentiel à l'enveloppe du gazogène dans la zone du gazogène secondaire, le long d'une fente annulaire (16) lui permettant ainsi de s'échauffer dans un courant de même sens.

7. Gazogène suivant la revendication 1, caractérisé en ce que la buse annulaire à symétrie radiale (19) est disposée au-dessus d'une grille annulaire (22) mobile et réglable en hauteur et en ce que ladite grille (22) est en relation avec des dispositifs vibratoires (23).

8. Gazogène suivant la revendication 1, caractérisé en ce qu'une ouverture de réglage (31) destinée au fonctionnement à l'arrêt du gazogène est prévue dans le couvercle supérieur du gazogène et donc au-dessus du gazogène secondaire (20).

9. Gazogène suivant la revendication 1, caractérisé en ce que la conduite d'amenée de gaz externes (30) débouche dans une conduite tubulaire (48) qui est reliée à un dispositif de lavage des gaz par pyrolyse, à savoir au choix une chambre de réaction (43), ou un container pour pyrolyse (47), ou un tambour de lavage par pyrolyse (49), dispositif auquel il est possible d'amener une partie du gaz du gazogène sortant par l'aspiration (24) après passage par un réducteur de pression (38 ou 41) et un by-pass (37) de telle façon que le mélange constitué par le gaz brûlant et partiellement consumé du gazogène et par le gaz de distillation du dispositif laveur par pyrolyse (43, 47, 49) comportant des particules solides et/ou liquides provenant de la pyrolyse, puisse être introduit dans le transformateur de gaz tourbillonnant (14).

F i g.1

F i g. 2

F i g.3

F i g.4